# EUROPEAN PATENT APPLICATION

(11) **EP 4 250 794 A1**
(43) Date of publication of application: **27.09.2023**
(21) Application number: 22305331.5
(22) Date of filing: 21.03.2022
(51) Int. Cl.: H04W 12/80, H04W 12/08, H04W 12/04, H04W 48/18

(54) **LAWFUL INTERCEPTION OF ACTIVITY OF AN APPLICATION FUNCTION**

(71) Applicant: Thales Dis France SAS, 92190 Meudon (FR)
(72) Inventor: DANY, Vincent, 13400 AUBAGNE (FR); PAULIAC, Mireille, 13470 CARNOUX EN PROVENCE (FR)
(74) Representative: Thomas, Christine Marie Catherine

(57) **Abstract**

The present invention relates to a method to enable lawful interception of activities of a user equipment UE with an application function AF associated to a bootstrapping technology, said activities using an AF key, while the UE is in a roaming situation with a visited Public Land Mobile Network vPLMN using a Generic Universal Temporary Identifier GUTI, said vPLMN having been provided, for lawful interception purposes, with a said provided application function key by a third party controlling the AF.

## Description

### FIELD OF THE INVENTION

The present invention relates to a method to enable lawful interception of activities of a user equipment UE with an application function AF associated to a bootstrapping technology.

The invention also pertains to a user equipment UE implementing said method and to a bootstrapping Anchor Function implementing said method.

### BACKGROUND OF THE INVENTION

Bootstrapping technologies enable keys to be shared between a user equipment UE and an application function AF. Such bootstrapping technologies are typically the Generic Bootstrapping Architecture GBA or Authentication and Key Management for Applications AKMA based on 3GPP credentials in the 5G System. GBA has been defined in 4G, while AKMA has been specified in 5G Rel-17.

These technologies are gaining new applications with the development, among others, of the Edge Computing and of Proximity Services, known under ProSe acronym. In particular, V2X applications implicating vehicles are an example of services based on ProSe enabler.

Also, those usages increase the use case for having the Application Function outside of the currently used Public Land Mobile Network PLMN which causes specific situations regarding the access to UE's activities using Application Function.

In particular, roaming use cases have been excluded from Rel-17 by lawful interception LI group (3GPP SA3-LI) until a solution is warranty that VPLMN is receiving the appropriate material to ensure LI.

A solution could be to use certificate-based TLS but this solution is not privileged for the applications newly developed. Bootstrapping technologies have real advantages in comparison and there is a need to fulfill Lawful Interception requirements for all deployments scenarios, typically an UE in roaming for those technologies too.

Bootstrapping technologies, typically GBA and AKMA, enable the establishment of keys shared between a UE and an AF. 3GPP does not preclude the AF to be operated outside a visited Public Land Mobile Network VPLMN. The AF could be operated by the Home Network HPLMN, or a visited network, or a third party. During 3GPP Rel-17, 3GPP SA3 LI group in charge of Lawful Interceptions raised the following issue.

The shared key in most cases can be used for encryption across the VPLMN by creating an encrypted tunnel between the UE and a point outside the VPLMN, e.g. a point in the Home PLMN or in third party. This prevents Lawful Interception to take place in the VPLMN as required.

For encryption, which the MNO has been involved in establishing, there is a Lawful Interception requirement to provide either decrypted traffic or the means for law enforcement to decrypt the traffic.

This requirement applies to mechanism such as AKMA where the MNO is involved in establishing and distributing key material for encryption. There is thus lawful interception requirements for AKMA and GBA.

Furthermore, when roaming, LI needs to be possible to perform independently in each of the involved jurisdiction, including the ones of the roaming country. In particular, activation of LI in the VPLMN needs to be carried out without explicit support from a Home PMLN as it would otherwise lead information that the inbound roamer is LI target in the VPLMN. In particular, the problem to solve applies to AKMA and GBA.

So far, there is no solution known to address the problem described above. Further alternative and advantageous solutions would, accordingly, be desirable in the art.

### SUMMARY OF THE INVENTION

The present invention aims at enabling the lawful interception, also in roaming situation, for any application using a bootstrapping technology.

The present invention is defined, in its broadest sense, as a method to enable lawful interception of activities of a user equipment UE with an application function AF associated to a bootstrapping technology, said activities using an AF key, while the UE is in a roaming situation with a visited Public Land Mobile Network PLMN using at least one parameter known by both UE and visited PLMN, said visited PLMN having been provided, for lawful interception purposes, with a said provided application function key, said method comprising the steps of, respectively, for the UE or for the visited PLMN:
- sending the parameter known by both UE and visited PLMN encrypted with, respectively, the AF key or the provided AF key, to, respectively, the visited PLMN or the UE, and
for, respectively, the visited PLMN or the UE, which received the encrypted parameter:
- decrypting the with, respectively, the provided AF key or the AF key, and
- comparing the decrypted parameter with the parameter as known by, respectively, the visited PLMN or the UE which received the encrypted parameter,
- authorizing the use of the AF only if the comparison shows that both parameters are the same.

The Lawful Interception possibility of the invention is based on the provision, by the Home PLMN (HPLMN in the following), or by any third party responsible for a given application function AF, of the shared AF key to the visited PLMN. It is here noted that the AF belongs to HPLMN or to a third party. So far, the provisioning of the shared AF key is under the responsibility of the HPLMN only, as the HPLMN is the owner of an anchor function, typically the AAnF for AKMA Anchor Function, where the AF key is derived. However the invention also applies to situations where such key is provided by the third party which monitors the application function. The invention applies to both cases.

The invention further ensures that the HPLMN, or the third party responsible to provide the application function key, cannot lie to the Visited PLMN (VPLMN in the following) on the shared key value. Otherwise the provision of the AF key cannot be of any value for the lawful interception requirement.

In bootstrapping technology context, the scenario where the HPLMN could lie to the VPLMN on the value of the shared AF key takes place when the UE is in roaming and that the AF belongs to the HPLMN or to another party.

The invention includes a way, in the case where the AF key is provided systematically to the VPLMN, to check that a correct AF key was provided to fulfil Lawful Interceptions requirements. In other words, the invention enables the VPLMN to verify the AF key as provided by the HPLMN when the UE is in roaming and when the AF is operated by the HPLMN, or by a third party of the visited PLMN.

The invention prevents a HPLMN or any PLMN hosting an Application Function implementing a bootstrapping technology and thus an AF key to lie to any other PLMN, typically a VPLMN, on shared keys used between UE and AF.

The invention thus relies on the usage of an AF key as provided by the HPLMN, or by another entity associated to the AF, to the VPLMN and of parameter(s) known by UE and VPLMN. The invention involves a parameter known by UE and VPLMN.

In a preferred embodiment, this parameter is a Generic Universal Temporary Identifier GUTI.

This embodiment uses the main parameter used for the connection of the UE to the visited PLMN and is thus a simple and thus preferred embodiment.

The invention enables to check the authenticity of the application function key, in a user equipment roaming context where the user equipment using the application function key is connected to a visited Public Land Mobile Network.

This invention ensures that GBA and AKMA solutions, which besides generally rely on the presence of an USIM, could be used in any deployment scenario where there is interest in securing interfaces thanks to Pre-share key-TLS PSK-TLS.

According to an advantageous feature, an application function identifier to identify the concerned AF is included in exchanges between the UE and the visited PLMN

Such an AF identifier enables to retrieve the appropriate application function key and to authorize the use of the right verified application function. Such an identifier is a minima associated to the message comprising the encrypted parameter and to the authorization related messages.

According to a particular feature, the UE having an Home Public Land Mobile Network PLMN, the provisioning of the application function key is done by the Home PLMN.

This situation corresponds to the case where the Home PLMN owns the AF but also to cases where the Home PLMN centralizes the management of bootstrapping scenarios involving third parties. This is the schema that is most of the time currently implemented when a third party in the meaning of the 3GPP standardisation is involved in the management of the AF. In such a case, the home PLMN receives necessary key information from such third parties for the implementation of the bootstrapping, thus including application function keys.

According to another particular feature of the invention, the bootstrapping technology implementing an Anchor Function in PLMN, said anchor function storing application function keys resulting from bootstrapping technology, the steps as performed by the visited PLMN are performed by the Anchor Function of the visited PLMN.

This feature corresponds to the simplest implementation of the invention in a visited PLMN. The centralization of the bootstrapping necessary material in the anchor function of the visited PLMN and performing the steps of the invention within the anchor function is a simple and efficient way to implement the invention.

According to an implementation, the roaming situation using an access management function, the step of, for the entity which encrypts the parameter known by both UE and the visited PLMN, sending the encrypted parameter to the other entity, comprises a sub-step of, for the encrypting entity, to send the encrypted parameter to the access management function which forwards it to the other entity.

This implementation implies the access management function AMF as generally active in roaming situation to be involved in the method of the invention. This is here noted that, when an AF identifier is used, it follows the same way via the AMF.

The invention also concerns a user equipment UE having roaming features with a visited PLMN using a parameter known by both UE and visited PLMN and having a duty to enable lawful interception of its activities with an application function AF associated to a bootstrapping technology, said activities using an AF key stored in the UE, said UE comprising:
- an encryption/decryption module adapted to encrypt the parameter known by both UE and visited PLMN using the stored AF key and/or to decrypt a received encrypted parameter using the stored AF key,
- a reception/transmission module adapted to send the encrypted parameter to the visited PLMN and/or to receive the encrypted parameter from the visited PLMN,
- a processing module adapted to compare a decrypted paremeter with the parameter as known by the UE in the case where the parameter is decrypted, the reception/transmission module being, in this case, further adapted to send the result of the comparison to an access management function for it to authorize the use of the AF only if the comparison shows that both parameters are the same.

Such a user equipment is adapted to the implementation of the method of the invention according to the both embodiments of the method, i.e. in the direction from the UE to the visited PLMN or from the visited PLMN to the UE. Of course these two embodiments can be implemented in one direction for a specific AF and in the other direction for another AF. The two embodiments can coexist or one of them can also be exclusively implemented to perform the method of the invention. The use of the terms "or" and "and/or" in the claims aims to cover the both embodiments together or independently in the definition of the scope of the invention. The term "respectively" enables to cover the two embodiments in parallel.

The invention also relates to a PLMN adapted to attach a user equipment UE in a roaming situation as a visited Public Land Mobile Network PLMN using a parameter known by both UE and itself as a visited PLMNand adapted to enable lawful interception of activities of the UE with an application function AF associated to a bootstrapping technology said AF being owned by a third party of the PLMN, said activities using an AF key,
said PLMN being adapted to be provided with an application function key,
said PLMN further comprising:
   - an encryption/decryption module adapted to encrypt the parameter using the provided AF key and/or to decrypt a received encrypted parameter using the provided AF key,
   - reception/transmission module adapted to send the encrypted parameter to the UE and/or to receive the encrypted parameter from the UE,
   - a processing module adapted to compare a decrypted parameter with the parameter as known by PLMN in the case where the parameter is decrypted by the PLMN, the reception/transmission module being, in this case, further adapted to send the result of the comparison to an access management function for it to authorize the use of the AF only if the comparison shows that both parameter are the same.

Such a PLMN is adapted to perform both embodiments of the method of the invention. Again the implementation of only one embodiment without the second one is included in the scope as defined in the claims.

It is here noted that in general and in other parts of the patent application, the terms "third party" designates what it generally designates in 3GPP, i.e. corresponds to an entity distinct/independent from the operator, this operator being the Home PLMN or the Visited PLMN. In the above definition of a PLMN of the invention in the last paragraphs, these terms designates, however, all third parties of the PLMN, including, this time, also the Home PLMN.

According to an advantageous implementation, the PLMN has a bootstrapping Anchor Function adapted to perform the steps of the method of the invention.

As seen above, this implementation is a simple and efficient way to implement the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 shows a time flowchart of a first embodiment of the method of the invention ;
- Figure 2 shows a time flowchart of a second embodiment of the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

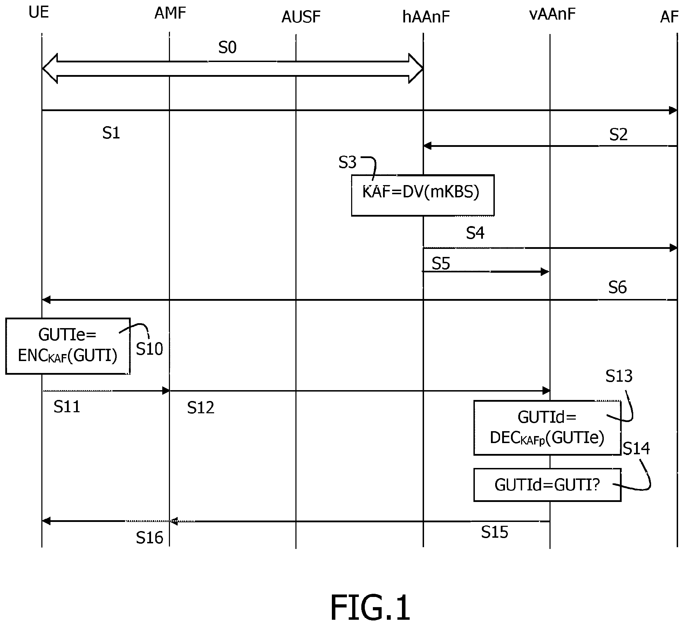

Figure 1 schematically shows a flowchart of a method of the invention. The method of the invention device 10 of the type to which the present invention is applied as an embodiment. The invention concerns GBA and AKMA as bootstrapping technologies implemented in 5G. The following illustrative description is done for an AKMA bootstrapping but similar functional entities exist in GBA or in other bootstrapping technologies and the implementation of the invention would be similar.

In this exemplary flowchart, a user equipment UE is in roaming situation with a visited Public Land Mobile Network VPLMN having a visited AKMA anchor function vAAnF. While attaching to the VPLMN, the UE has been provided by a Generic Universal Temporary Identifier GUTI.

As a pre-requisite of the invention, the UE was registered and derived bootstrapping AF keys, in a step S0, for the use of application functions AF using a Bootstrapping technology, typically AKMA-based AF keys for the use of several AF. This prerequisite can be done before or during the roaming situation as soon as the UE can enter in relation with the AF. For this registration, the UE is in communication with an Access and Mobility Management Function AMF in 5G, and with an Authentication Server Function AUSF.

The registration is done for the use of an Application Function AF managed by the Home PLMN of the UE or another entity. In such situation, this can be the anchor function hAAnF of the Home PLMN which derives the keys relative to the bootstrapping technology but the AF key can also be managed and thus provided by any other third party habilitated to manage such AF.

A primary authentication and an establishment of useful keys for the bootstrapping technology is thus performed in the preliminary step S0. The useful keys, including at least a master bootstrapping key mKBS from which the application function keys will be derived, are then stored in the Anchor Function hAAnF, which belongs here to the Home PLMN. It could also be an anchor function belonging to a third party which manages the application function AF. This step in a pre-requisite of the method of the invention.

Then in a step S1, the UE, while in roaming situation, requests an Application session establishment with the AF. This implies the sending of an AKMA Key identifier of UE A-KID in an AKMA infrastructure. The identifier that would be used in a GBA infrastructure is B-TID.

In a step S2, the AF then sends a request for an application key KAF with A-KID and an AF identifier AF_ID. This request is done to the Anchor Function hAAnF in charge of the management of the AF and with which the UE has previously proceeded to a primary authentication and establishment of a master bootstrapping key mKBS.

In a step S3, the hAAnF derives an application function key KAF from the master bootstrapping key mKBS as previously stored. Then, in a step S4, the hAAnF answers to the AF while sending at least the key KAF and, advantageously a key expiration time.

In a step S5, as the hAAnF is informed of the visited PLMN of the UE, the hAAnF also sends the key KAF to the visited Anchor Function vAAnF. The vAAnF is the entity receiving the KAF from the Home PLMN of the UE or from the third party, which manages the application function. Here it is thus noted that it could be another third party than the hAAnF that would be informed of the visited PLMN of the UE in order to be able to provide the necessary AF key.

Step S4 triggers an answer, in a step S6, of the AF to the UE informing the UE that an application session is established.

In a first embodiment of the invention, after the Application Session establishment response, messages are exchanged in the direction from the UE, in roaming situation, to the AMF, which then communicates with the vAAnF.

In a step S10, the UE encrypts the GUTI with KAF. It then sends, in a step S11, the encrypted GUTIe to the AMF together with an identifier enabling to retrieve the appropriate KAF in the targeted VAAnF. In a step S12, the AMF, which knows the GUTI, forwards to the vAAnF both the encrypted GUTIe and the GUTI in clear text with the identifier enabling to retrieve the appropriate KAF in the targeted VAAnF. In a step S13, the vAAnF then deciphers the encrypted GUTIe with the KAFp as received from the hAAnF of the home PLMN or from third party that manages the AF.

The deciphered GUTId is compared with the received GUTI in clear text in a step S14. In a step S15, the vAAnF sends message to the AMF indicating if the GUTI verification was successful or not with the identifier enabling to retrieve the appropriate KAF in the UE. The AMF then sends message to the UE indicating if the GUTI verification was successful or not, as illustrated by a step S16. The UE then uses the application function AF only in the case the verification was successful.

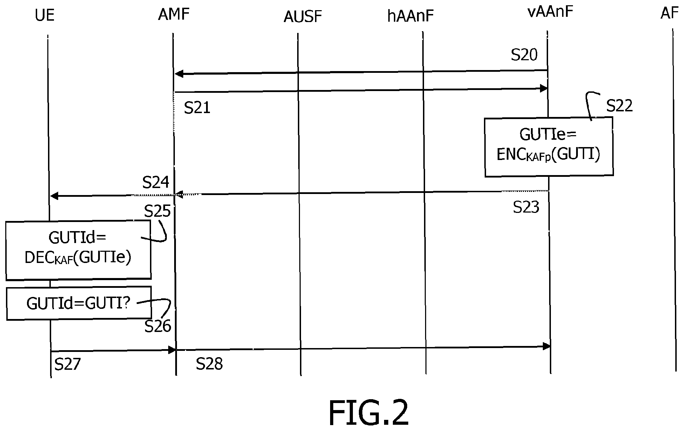

In a second embodiment, shown on figure 2, after the Application Session establishment response of step S6, messages are exchanged in the direction from the vAAnF to the AMF, which then forwards to the UE.

In a first step S20, the vAAnF contacts the AMF to obtain the GUTI in a step S21. Then, in a step S22, the vAAnF encrypts the GUTI with the key KAFp as received from the hAAnF.

The vAAnF then sends the encrypted GUTIe to the AMF in a step S23together with an identifier enabling to retrieve the appropriate KAF in the UE. The AMF forwards the encrypted GUTIe to the UE in a step S24, together with an identifier enabling to retrieve the appropriate KAF. In a step S25, the UE decrypts the GUTI with the appropriate key KAF. It then compares the decrypted value GUTId with the GUTI stored in the UE in a step S26. The UE sends message to the AMF indicating if GUTI verification was successful or not in a step S27. The AMF then forwards the indication to the vAAnF in a step S28. The UE uses the application function only if the verification was successful.

With the invention, as soon as the UE is in roaming, then the UE checks whether the GUTI verification has been performed while having requested any use of any application function AF. The applicative steps with the AF then take place only if the GUTI verification took place. The solutions apply to any application using bootstrapping technologies, typically AKMA and GBA.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to enable lawful interception of activities of a user equipment UE with an application function AF associated to a bootstrapping technology, said activities using an AF key, while the UE is in a roaming situation with a visited Public Land Mobile Network PLMN using at least one parameter known by both UE and visited PLMN, said visited PLMN having been provided, for lawful interception purposes, with a said provided application function key, said method comprising the steps of, respectively, for the UE or for the visited PLMN:
- sending the parameter known by both UE and visited PLMN encrypted with, respectively, the AF key or the provided AF key, to, respectively, the visited PLMN or the UE, and
for, respectively, the visited PLMN or the UE, which received the encrypted parameter:
- decrypting the with, respectively, the provided AF key or the AF key, and
- comparing the decrypted parameter with the parameter as known by, respectively, the visited PLMN or the UE which received the encrypted parameter,
- authorizing the use of the AF only if the comparison shows that both parameters are the same.

2. Method according to claim 1, wherein the parameter known by both UE and the visited PLMN is a Generic Universal Temporary Identifier GUTI.

3. Method according to one of preceding claims, wherein an application function identifier to identify the concerned AF is included in exchanges between the UE and the visited PLMN.

4. Method according to one of preceding claims, wherein the UE having an Home Public Land Mobile Network PLMN, the provisioning of the application function key is done by the Home PLMN.

5. Method according to one of preceding claims, wherein the bootstrapping technology implementing an Anchor Function in PLMN, said anchor function storing application function keys resulting from bootstrapping technology, the steps as performed by the visited PLMN are performed by the Anchor Function of the visited PLMN.

6. Method according to one of preceding claims, wherein the roaming situation using an access management function, the step of, for the entity which encrypts the parameter known by both UE and the visited PLMN, sending the encrypted parameter to the other entity, comprises a sub-step of, for the encrypting entity, to send the encrypted parameter to the access management function which forwards it to the other entity.

7. User equipment UE having roaming features with a visited PLMN using a parameter known by both UE and visited PLMN and having a duty to enable lawful interception of its activities with an application function AF associated to a bootstrapping technology, said activities using an AF key stored in the UE, said UE comprising:
- an encryption/decryption module adapted to encrypt the parameter known by both UE and visited PLMN using the stored AF key and/or to decrypt a received encrypted parameter using the stored AF key,
- a reception/transmission module adapted to send the encrypted parameter to the visited PLMN and/or to receive the encrypted parameter from the visited PLMN,
- a processing module adapted to compare a decrypted paremeter with the parameter as known by the UE in the case where the parameter is decrypted, the reception/transmission module being, in this case, further adapted to send the result of the comparison to an access management function for it to authorize the use of the AF only if the comparison shows that both parameters are the same.

8. PLMN adapted to attach a user equipment UE in a roaming situation as a visited Public Land Mobile Network PLMN using a parameter known by both UE and itself as a visited PLMN and adapted to enable lawful interception of activities of the UE with an application function AF associated to a bootstrapping technology said AF being owned by a third party of the PLMN, said activities using an AF key,
said PLMN being adapted to be provided with an application function key,
said PLMN further comprising:
- an encryption/decryption module adapted to encrypt the parameter using the provided AF key and/or to decrypt a received encrypted parameter using the provided AF key,
- reception/transmission module adapted to send the encrypted parameter to the UE and/or to receive the encrypted parameter from the UE,
- a processing module adapted to compare a decrypted parameter with the parameter as known by PLMN in the case where the parameter is decrypted by the PLMN, the reception/transmission module being, in this case, further adapted to send the result of the comparison to an access management function for it to authorize the use of the AF only if the comparison shows that both parameter are the same.

9. PLMN according to claim 8, said PLMN having a bootstrapping Anchor Function adapted to perform the steps of the method of claims 1 to 6.
